# EUROPEAN PATENT APPLICATION

(11) **EP 2 765 687 A2**
(43) Date of publication of application: **13.08.2014**
(21) Application number: 14154249.8
(22) Date of filing: 07.02.2014
(51) Int. Cl.: H02K 3/52

(54) **Electricity collection and distribution ring and method of manufacturing the same**

(30) Priority: 08.02.2013 JP 2013022918
(71) Applicant: HITACHI METALS, LTD., Minato-ku, Tokyo 105-8614 (JP)
(72) Inventor: Egami, Kenichi, Tokyo 105-8614 (JP)
(74) Representative: Betten & Resch

(57) **Abstract**

An electricity collection and distribution ring includes a plurality of bus rings for collecting and distributing power from/to multiple-phase windings wound around a plurality of circularly-arranged teeth, and a holding member includin a resin and holding the plurality of bus rings. The holding member includes an annular shape along the plurality of bus rings and a exposure portion formed at a plurality of circumferential positions in a radial direction so as to expose the plurality of bus rings.

## Description

### BACKGROUND OF THE INVENTION

### 1. FIELD OF THE INVENTION

The invention relates to an electricity collection and distribution ring for collecting and distributing power from/to multiple-phase windings wound around plural teeth and to a method of manufacturing the electricity collection and distribution ring.

### 2. DESCRIPTION OF THE RELATED ART

An electricity collection and distribution ring is known which is used for collecting and distributing a motor current (i.e., power collection and power distribution) from/to windings of a stator in a three-phase motor etc. (See e.g. JP-A-2012-223023).

The electricity collection and distribution ring disclosed in JP-A-2012-223023 is provided with first to fourth bus rings, plural resin fixing members for fixing the first to fourth bus rings to each other, and plural connecting terminals for electrically connecting lead-out wires of respective phase-coils of the three-phase motor to the first to fourth bus rings. The fixing members are provided at plural positions in a circumferential direction of the first to fourth bus rings and each have integrally a locking portion for locking the first bus ring and a fixing portion for fixing the second to fourth bus rings to each other by molding.

### SUMMARY OF THE INVENTION

JP-A-2012-223023 discloses the manufacturing process of the electricity collection and distribution ring that the plural fixing members are molded such that a pair of molds, which correspond to the respective plural fixing members and are arranged inside and outside the second to fourth bus rings, are brought close to each other along a radial direction of the second to fourth bus rings and are clamped, and then, molten resin is injected into a molding space formed between the two molds. At this time, the molds located inside and outside the second to fourth bus rings need to be moved radially along the radial direction of the second to fourth bus rings and configuration of manufacturing equipment accordingly becomes complicated. The complicated manufacturing equipment is a factor in hindering cost reduction of the electricity collection and distribution ring.

It is an object of the invention to provide a method of manufacturing an electricity collection and distribution ring that is conducted by using a simplified manufacturing equipment so as to reduce the manufacturing cost of the ring, as well as the electricity collection and distribution ring obtained by the method.
(1) According one embodiment of the invention, an electricity collection and distribution ring comprises:
   a plurality of bus rings for collecting and distributing power from/to multiple-phase windings wound around a plurality of circularly-arranged teeth; and
   a holding member comprising a resin and holding the plurality of bus rings,
   wherein the holding member comprises an annular shape along the plurality of bus rings and a exposure portion formed at a plurality of circumferential positions in a radial direction so as to expose the plurality of bus rings.
(2) According another embodiment of the invention, a method of manufacturing an electricity collection and distribution ring, which comprises a plurality of bus rings for collecting and distributing power from/to multiple-phase windings wound around a plurality of circularly-arranged teeth and a holding member comprising and holding the plurality of bus rings, comprises:
   providing a mold comprising a pair of mold members that relatively move along an axial direction of the plurality of bus rings and form an annular molding space along a circumferential direction of the plurality of bus rings when being clamped; and
   molding the holding member by injecting a molten resin into the molding space in a state that the plurality of bus rings are supported in the molding space.

### Effects of the invention

According one embodiment of the invention, a method of manufacturing an electricity collection and distribution ring can be provided that is conducted by using a simplified manufacturing equipment so as to reduce the manufacturing cost of the ring, as well as the electricity collection and distribution ring obtained by the method.

### BRIEF DESCRIPTION OF THE DRAWINGS

Next, the present invention will be explained in more detail in conjunction with appended drawings, wherein:
**FIG.1** is a schematic explanatory diagram illustrating an outline structure example of an electric motor in a first embodiment of the present invention;
**FIGS.2A** to 2C show an electricity collection and distribution ring in the first embodiment, wherein **FIG.2A** is a perspective view, **FIG.2B** is a front view as viewed from an axial direction of the electricity collection and distribution ring and **FIG.2C** is an enlarged view of a section B in **FIG.2B****;**
**FIG.3** is a partial enlarged view showing first to third bus rings and a neutral-phase bus ring in the first embodiment;
**FIG.4** is a cross sectional view taken on line A-A of **FIG.2A****,**

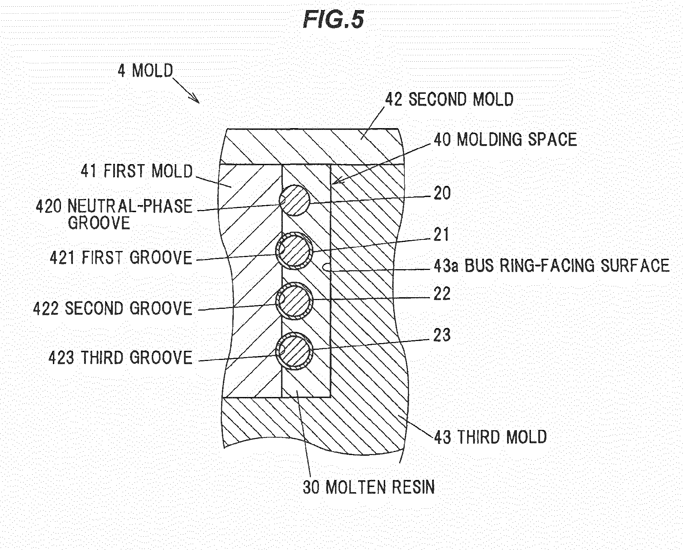

**FIG.5** shows an example of a manufacturing process of the electricity collection and distribution ring in the first embodiment and is a cross sectional view at a recessed portion of a holding member;
**FIGS.6A** and **6B** show an electricity collection and distribution ring in a second embodiment of the invention, wherein **FIG.6A** is a perspective view, **FIG.6B** is a front view as viewed from the axial direction of the electricity collection and distribution ring and **FIG.6C** is an enlarged view of a section C in **FIG.6A****;**
**FIG.7** is a partial enlarged view showing first to third bus rings and a neutral-phase bus ring in the second embodiment;
**FIG.8** is a cross sectional view taken on line D-D of **FIG.6B****;** and
**FIG9** shows an example of a manufacturing process of the electricity collection and distribution ring in the second embodiment and is a cross sectional view taken on line E-E of **FIG.6****B.**

### DETAILED DESCRIPTION OF THE PREFERRED EMBODIMENTS

### First embodiment

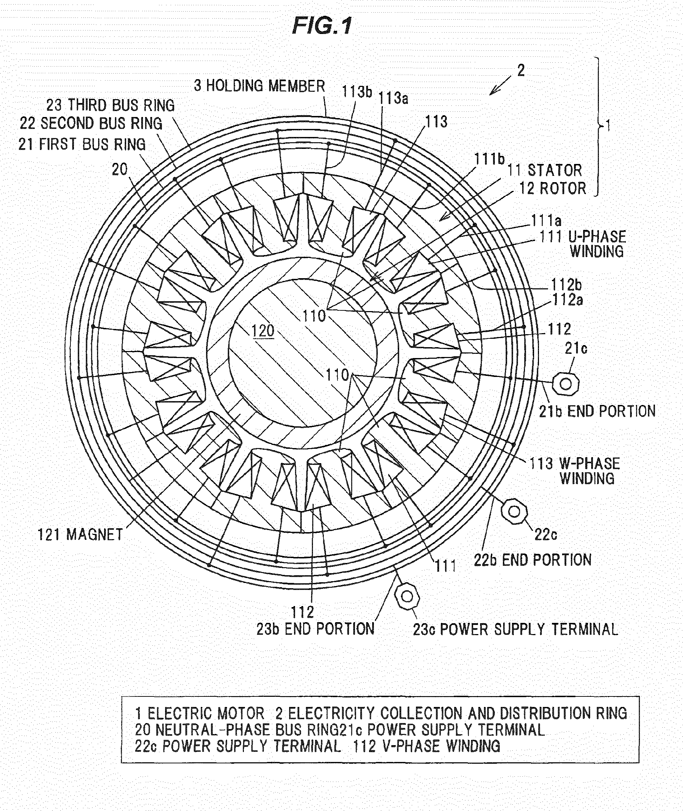

**FIG.1** is a schematic explanatory diagram illustrating an outline structure example of an electric motor **1** in the first embodiment of the invention.

### Structure of the electric motor 1

The electric motor **1** is provided with a stator **11,** a rotor **12** and an electricity collection and distribution ring **2** for collecting and distributing a driving current from/to the stator **11.**

The stator **11** is formed by winding multiple phase windings **111, 112** and **113** around plural teeth **110** formed of a magnetic material. The U-phase winding **111,** the V-phase winding **112** or the W-phase winding **113** is wound around each tooth **110.** The U-phase winding **111,** the V-phase winding **112** and the W-phase winding **113** are arranged in this order along a circumferential direction of the stator **11** (in the clockwise direction in **FIG.1****)**

An end portion of the U-phase winding **111** is configured as a first lead-out wire **111a** and another end portion of the U-phase winding **111** is configured as a second lead-out wire **111b**. Likewise, an end portion of the V-phase winding **112** is configured as a first lead-out wire **112a** and another end portion is configured as a second lead-out wire **112b**. Also, an end portion of the W-phase winding **113** is configured as a first lead-out wire 113a and another end portion is configured as a second lead-out wire **113b**.

The rotor **12** has a shaft **120** rotatably supported by a non-illustrated shaft bearing so as to be coaxial with the stator **11** and a magnet **121** having plural magnetic poles and fixed to an outer peripheral surface of the shaft **120.**

The electricity collection and distribution ring **2** is provided with first to third bus rings **21** to **23** and a holding member **3.** The first to third bus rings **21** to **23** distribute a driving current output from a non-illustrated inverter to each of the U-, V- and W-phase windings **111, 112** and **113** of the electric motor **1.** The first to third bus rings **21** to **23** are arranged concentrically with the stator **11.** Power supply terminals **21c, 22c** and **23c** to which U-, V- and W-phase driving currents are supplied are respectively connected to end portions **21b, 22b** and 23b of the first to third bus rings **21** to **23**.

The first lead-out wire **111a** of the U-phase winding **111** is connected to the first bus ring **21.** The first lead-out wire **112a** of the V-phase winding **112** is connected to the second bus ring **22.** The first lead-out wire **113a** of the W-phase winding **113** is connected to the third bus ring **23.**

The electric motor **1** is also provided with an annular neutral-phase bus ring **20** to which the second lead-out wire **111b** of the U-phase winding **111,** the second lead-out wire **112b** of the V-phase winding **112** and the second lead-out wire **113b** of the W-phase winding **113** are connected. The neutral-phase bus ring **20** is arranged concentrically with the stator **11** and with the first to third bus rings **21** to **23.**

A drive current having sine waveforms **120** degrees out of phase with each other is supplied to the U-phase winding **111,** the V-phase winding **112** and the W-phase winding **113** from the non-illustrated inverter and this creates a rotating magnetic field in the stator **11.** The magnet **121** receives a torque generated by an attractive force and a repulsive force caused by the rotating magnetic field and the shaft **120** is rotated by the torque.

### Structure of the electricity collection and distribution ring 2

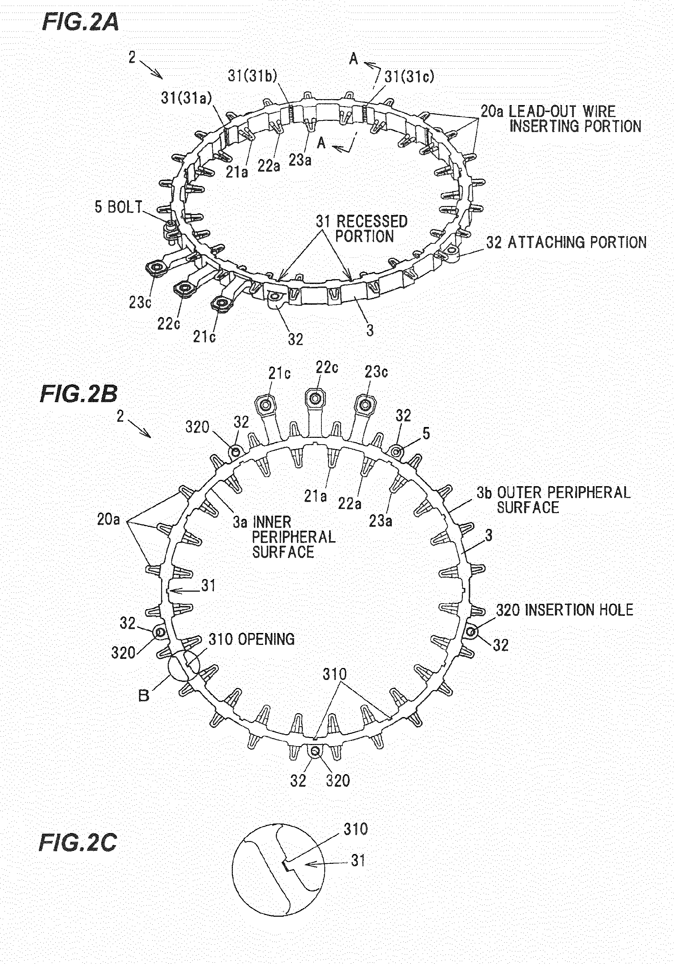

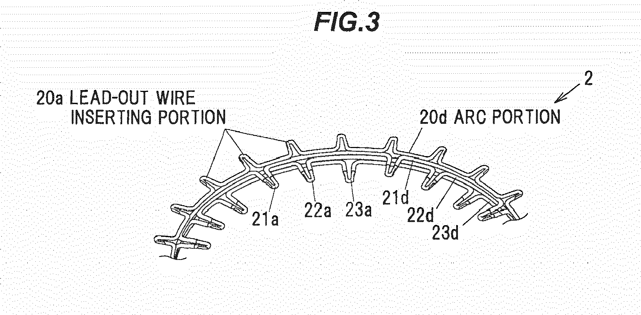

**FIGS.2A** to **2C** show the electricity collection and distribution ring **2** in the first embodiment, wherein **FIG.2A** is a perspective view, **FIG2B** is a front view as viewed from an axial direction of the electricity collection and distribution ring **2** and **FIG.2C** is an enlarged view of a section B in **FIG2****B.** **FIG.3** is a partial enlarged view showing the first to third bus rings **21** to **23** and the neutral-phase bus ring **20.**

As shown in **FIG3****,** the first to third bus rings **21** to **23** and the neutral-phase bus ring **20** are formed in an annular shape, are arranged in parallel to each other along the axial direction of the electricity collection and distribution ring **2,** and are fixed to each other by the holding member **3** (see **FIGS.2A** and **2B****)** which is formed of a resin. In the first embodiment, the neutral-phase bus ring **20,** the first bus ring **21,** the second bus ring **22** and the third bus ring **23** are arranged in this order from the upper side in the axial direction of the electricity collection and distribution ring **2.**

As shown in **FIG.3****,** the first bus ring **21** has lead-out wire inserting portions **21a** formed at plural circumferential positions and plural arc portions **21d** formed between the plural lead-out wire inserting portions **21a.** The plural lead-out wire inserting portions **21a** protrude radially inward of the plural arc portions **21d.**

Likewise, the second bus ring **22** has plural lead-out wire inserting portions **22a** formed at plural circumferential positions and plural arc portions **22d** formed between the plural lead-out wire inserting portions **22a.** The plural lead-out wire inserting portions **22a** protrude radially inward of the plural arc portions **22d.**

In the same way, the third bus ring **23** has plural lead-out wire inserting portions **23a** formed at plural circumferential positions and plural arc portions **23d** formed between the plural lead-out wire inserting portions **23a.** The plural lead-out wire inserting portions **23a** protrude radially inward of the plural arc portions **23d.**

The neutral-phase bus ring **20** has plural lead-out wire inserting portions **20a** formed at plural circumferential positions and plural arc portions **20d** formed between the plural lead-out wire inserting portions **20a.** The plural lead-out wire inserting portions **20a** protrude radially outward of the plural arc portions **20d.** In other words, the lead-out wire inserting portions **21a, 22a** and **23a** of the first to third bus rings **21** to **23** protrude radially inward of the arc portions **21d, 22d** and **23d** and the lead-out wire inserting portions **20a** of the neutral-phase bus ring **20** protrude radially outward of the arc portions **20d.**

In the first embodiment, the neutral-phase bus ring **20** has twenty-four lead-out wire inserting portions 20a and the first to third bus rings **21** to **23** respectively have eight lead-out wire inserting portions **21a, 22a** and **23a.** The protruding direction of the lead-out wire inserting portions **20a** of the neutral-phase bus ring **20** which has the largest number of lead-out wire inserting portions is opposite to a protruding direction of the lead-out wire inserting portions **21a, 22a** and **23a** of the first to third bus rings **21** to **23.** Note that, the total number (twenty-four) of the lead-out wire inserting portions **21a, 22a** and **23a** (eight each) of the first to third bus rings **21** to **23** matches the number of the lead-out wire inserting portions **20a** (twenty-four) of the neutral-phase bus ring **20.**

As shown in **FIGS.2A** and **2B****,** the holding member **3** is formed in an annular shape along the first to third bus rings **21** to **23** as well as along the neutral-phase bus ring **20** and has plural recessed portions **31** (twelve in the first embodiment) as exposure portions formed at plural positions in a circumferential direction thereof so that the first to third bus rings **21** to **23** are exposed in a radial direction. As shown in **FIGS.2B** and **2C****,** the recessed portion **31** is a recess having an opening **310** on an inner peripheral surface **3a** of the holding member **3** through which the first to third bus rings **21** to **23** and the neutral-phase bus ring **20** are viewed on the radially inside. Alternatively, the recessed portion **31** may be formed as a recess having an opening on an outer peripheral surface 3b of the holding member **3** through which the first to third bus rings **21** to **23** and the neutral-phase bus ring **20** are viewed on the radially outside.

When three circumferentially-arranged recessed portions **31** of the plural recessed portions **31** are defined as first, second and third recessed portions **31a, 31b** and **31c** as shown in **FIG2A****,** the lead-out wire inserting portion **21a** of the first bus ring **21** and the lead-out wire inserting portion **22a** of the second bus ring **22** are arranged between the first recessed portion **31a** and the second recessed portion **31b.** The lead-out wire inserting portion **23a** of the third bus ring **23** and the lead-out wire inserting portion **21a** of the first bus ring **21** are arranged between the second recessed portion **31b** and the third recessed portion **31c.** The lead-out wire inserting portion **22a** of the second bus ring **22** and the lead-out wire inserting portion **23a** of the third bus ring **23** are arranged between the third recessed portion **31c** and the first recessed portion **31a.** In other words, two lead-out wire inserting portions are arranged between the recessed portions 31 adjacent to each other. Alternatively, the recessed portions **31** may be formed so that one lead-out wire inserting portion is arranged between the recessed portions **31** adjacent to each other.

Plural attaching portions **32** (five in the first embodiment) for attaching the electricity collection and distribution ring **2** to the stator **11** are formed on the holding member **3** so as to protrude radially outward of the electricity collection and distribution ring **2.** An insertion hole **320** through which a bolt **5** for fixing the electricity collection and distribution ring **2** to the stator **11** is inserted is formed on each attaching portion **32.** It should be noted that only one bolt 5 is shown in **FIGS.2A** and **2B****.**

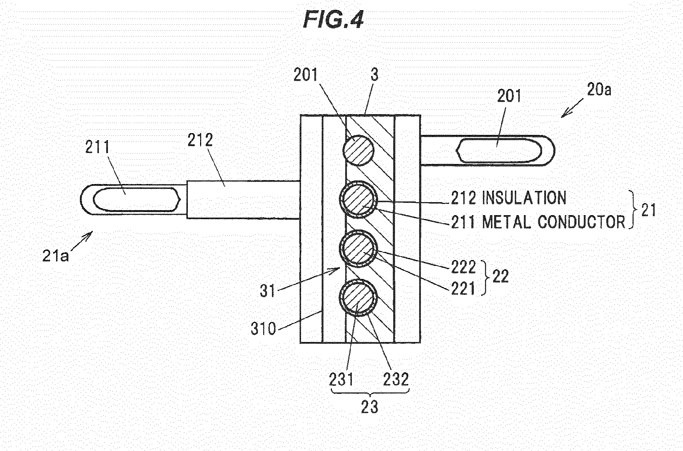

**FIG.4** is a cross sectional view taken on line A-A of **FIG.2A**

In the first embodiment, the first to third bus rings **21** to **23** are respectively covered with insulations **212, 222** and **232** and the neutral-phase bus ring **20** is not covered with an insulation. Note that, for ensuring insulation properties, it is only necessary that at least one of two axially adjacent of the first to third bus rings **21** to **23** and the neutral-phase bus ring 20 is covered with an insulation. In other words, it is acceptable as long as two bus rings with no insulation are not adjacent to each other.

In more detail, the first bus ring **21** is composed of a metal conductor **211** formed of a highly conductive metal such as copper and the insulation **212** formed of an insulating resin covering an outer periphery of the metal conductor **211,** and has the lead-out wire inserting portions **21**a (see **FIG.3****)** formed by bending the metal conductor **211.** As shown in **FIG.4****,** the lead-out wire inserting portion **21a** is formed at a portion in which the insulation **212** is removed.

Likewise, the second bus ring **22** is composed of a metal conductor **221** formed of a highly conductive metal such as copper and the insulation **222** formed of an insulating resin covering an outer periphery of the metal conductor **221,** and has the lead-out wire inserting portions **22a** (see **FIG.3****)** formed by bending the metal conductor **221.** The lead-out wire inserting portion **22a** is formed at a portion in which the insulation **222** is removed.

In the same way, the third bus ring **23** is composed of a metal conductor **231** formed of a highly conductive metal such as copper and the insulation **232** formed of an insulating resin covering an outer periphery of the metal conductor **231,** and has the lead-out wire inserting portions **23a** (see **FIG.3****)** formed by bending the metal conductor **231.** The lead-out wire inserting portion 23a is formed at a portion in which the insulation **232** is removed.

Unlike the first to third bus rings **21** to **23,** the neutral-phase bus ring **20** is constructed only from a metal conductor **201** formed of a highly conductive metal such as copper and has the lead-out wire inserting portions **20a** (see **FIG3**) formed by bending the metal conductor **201.** Note that, since the neutral-phase bus ring **20** is a bare wire, the lead-out wire inserting portions 20a are formed to be smaller than the lead-out wire inserting portions **21a, 22a** and **23a.**

### Method of manufacturing the electricity collection and distribution ring 2

Next, a method of manufacturing the electricity collection and distribution ring **2** will be described below. **FIGS** shows an example of a manufacturing process of the electricity collection and distribution ring **2** in the first embodiment and is a cross sectional view at the recessed portion **31** of the holding member **3.**

The method of manufacturing the electricity collection and distribution ring **2** includes an arrangement step of arranging the first to third bus rings **21** to **23** and the neutral-phase bus ring **20** in a molding space **40** of a below-described mold **4,** and an injection step of injecting a molten resin **30** into the molding space **40** in a state that the first to third bus rings **21** to **23** and the neutral-phase bus ring **20** are supported in the molding space **40.**

The mold **4** is composed of a first mold **41,** a second mold **42** and a third mold **43.** A first groove **421** for supporting the first bus ring **21,** a second groove **422** for supporting the second bus ring **22,** a third groove **423** for supporting the third bus ring **23** and a neutral-phase groove **420** for supporting the neutral-phase bus ring **20** are formed on the first mold **41** so as to be along a circumferential direction of the first to third bus rings **21** to **23** and the neutral-phase bus ring **20.** The first to third grooves **421** to **423** and the neutral-phase groove **420** are formed in parallel to each other along an axial direction of the first to third bus rings **21** to **23** and the neutral-phase bus ring **20.**

In the arrangement step, the first to third bus rings **21** to **23** and the neutral-phase bus ring 20 are arranged in the fixed third mold **43** and the first mold **41** is moved from inside to outside in a radial direction. This is carried out so as to respectively support the first bus ring **21** in the first groove **421,** the second bus ring **22** in the second groove **422,** the third bus ring **23** in the third groove **423** and the neutral-phase bus ring **20** in the neutral-phase groove **420** Between the first mold **41** in which the first to third bus rings **21** to **23** and the neutral-phase bus ring **20** are supported and a bus ring-facing surface **43a** of the third mold **43** which faces the first to third bus rings **21** to **23** and the neutral-phase bus ring **20,** there may be a gap to the extent that the first to third bus rings **21** to **23** and the neutral-phase bus ring **20** do not come off from the first to third grooves **421** to **432** and the neutral-phase groove **420.**

Next, the second mold **42** is moved from axially above the first to third bus rings **21** to **23** and the neutral-phase bus ring **20** toward the first mold **41** and the third mold **43** and is then combined with the first mold **41** and the third mold **43.** The molding space **40** is thereby formed.

In the injection step, the molten resin **30** melted by heat is poured into the molding space **40** formed in the arrangement step. The molten resin **30** is naturally-cooled and cured (solidified) and the holding member **3** is thereby obtained. The first to third bus rings 21 to 23 and the neutral-phase bus ring **20** are held inside the holding member **3.** By releasing from the first mold **41** and the second mold **42,** the electricity collection and distribution ring **2** shown in **FIGS.2A** and **2B** is obtained.

### Functions and effects of the first embodiment

The following functions and effects are obtained in the first embodiment.
(1) In the electricity collection and distribution ring **2,** the holding member **3** is formed in an annular shape while supporting at portions to be the plural recessed portions **31,** which allows the holding member **3** to be molded using a pair of molds (the first mold 41 and the second mold **42** of the mold **4**) which relatively move along the axial direction of the first to third bus rings **21** to **23** and the neutral-phase bus ring **20.** This allows the configuration of manufacturing equipment to be simplified as compared to the case of forming plural independent holding members at plural positions in a circumferential direction of the electricity collection and distribution ring **2.**
(**2**) Since the first to third bus rings **21** to **23** are arranged in parallel to each other along the axial direction of the holding member **3** and the metal conductors **211, 221** and 231 of the bus rings are respectively covered with the insulations **212, 222** and **232,** it is possible to prevent electric leakage caused by contact of the metal conductors **211, 221** and **231** with each other or electric leakage due to a current flowing along the surface of the holding member **3.**
(3) The holding member **3** is a one-piece annular molded article but has the recessed portions **31** as the exposure portions formed thereon. Therefore, even if stress caused by thermal expansion, etc., is applied to the holding member **3,** it is possible to reduce such stress applied to the holding member **3.**

### Second embodiment

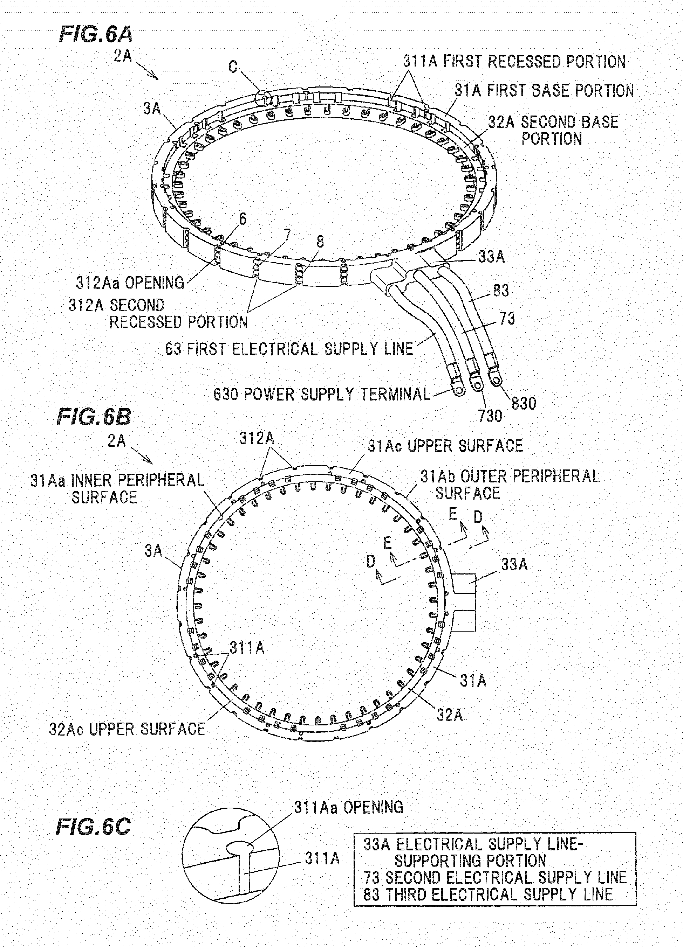

Next, the second embodiment of the invention will be described in reference to **FIGS.6A** to **9****.** Constituent elements having the same functions as those described in the first embodiment are denoted by the same reference numerals in **FIGS.6A** to **9** and an overlapped explanation thereof will be omitted.

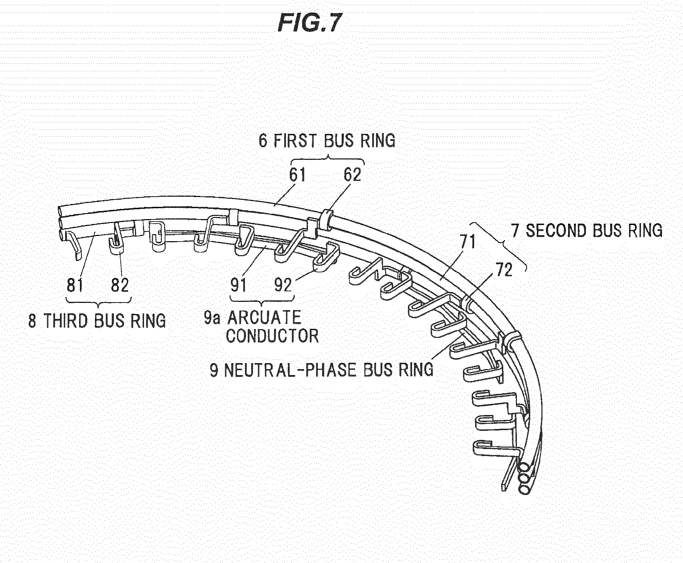

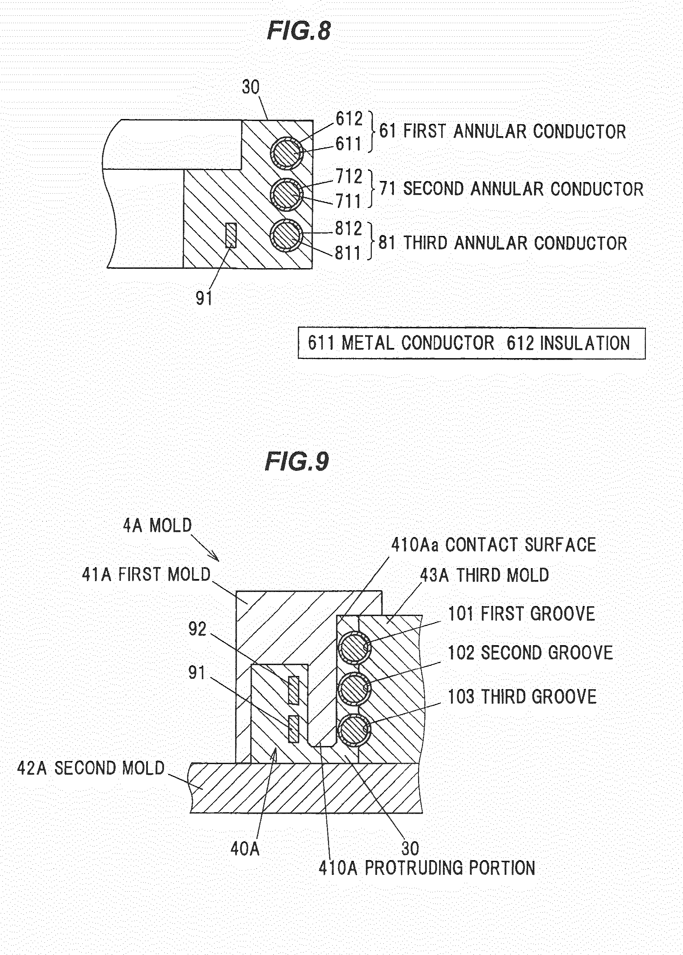

**FIGS.6A** and **6B** show an electricity collection and distribution ring 2A in the second embodiment of the invention, wherein **FIG.6A** is a perspective view, **FIG6B** is a front view as viewed from the axial direction of the electricity collection and distribution ring **2A** and **FIG6C** is an enlarged view of a section C in **FIG.6A****.** Note that, illustrations of first to third electrical supply lines **63, 73** and **83** and power supply terminals **630, 730** and **830** are omitted in **FIG.6****B.** **FIG.7** is a partial enlarged view showing first to third bus rings **6** to 8 and a neutral-phase bus ring 9 in the second embodiment. **FIG.8** is a cross sectional view taken on line D-D of **FIG.6B**

### Structure of the electricity collection and distribution ring 2A

The electricity collection and distribution ring **2A** in the second embodiment is provided with the first to third bus rings **6** to **8** and the neutral-phase bus ring **9** which collect and distribute power from/to the U-phase winding **111,** the V-phase winding **112** and the W-phase winding **113** wound around plural teeth **110** (see **FIG.1****)** and an annular holding member **3A** for holding the first to third bus rings **6** to **8** and the neutral-phase bus ring **9.**

As shown in **FIG.7****,** the first bus ring **6** has a first annular conductor **61** formed of an annular insulated wire centered around a rotational axis of the rotor **12** (see **FIG.1**), plural first connecting terminals **62** protruding radially inward from the first annular conductor **61,** and the first electrical supply line **63** with the power supply terminal 630 for supplying power to the first annular conductor **61.** As shown in **FIG.8****,** the first annular conductor **61** is composed of a metal conductor **611** formed of a highly conductive metal such as copper and an insulation **612** formed of an insulating resin covering an outer periphery of the metal conductor **611.**

Likewise, the second bus ring **7** has a second annular conductor **71** formed of an annular insulated wire centered around the rotational axis of the rotor **12** (see **FIG.1**), plural second connecting terminals **72** protruding radially inward from the second annular conductor **71,** and the second electrical supply line **73** with the power supply terminal **730** for supplying power to the second annular conductor **71.** As shown in **FIG.8**, the second annular conductor **71** is composed of a metal conductor **711** formed of a highly conductive metal such as copper and an insulation **712** formed of an insulating resin covering an outer periphery of the metal conductor **711.**

In the same way, the third bus ring **8** has a third annular conductor **81** formed of an annular insulated wire centered around the rotational axis of the rotor **12** (see **FIG.1**), third connecting terminals **82** protruding radially inward from the third annular conductor **81,** and the third electrical supply line **83** with the power supply terminal **830** for supplying power to the third annular conductor **81.** As shown in **FIG.8**, the third annular conductor **81** is composed of a metal conductor **811** formed of a highly conductive metal such as copper and an insulation **812** formed of an insulating resin covering an outer periphery of the metal conductor **811.**

The neutral-phase bus ring **9** is composed of plural arcuate conductors **9a** having an arcuate shape which are arranged along a circumferential direction of the holding member **3A** and form an annular shape as a whole. A plate-like conductive member having a predetermined shape is plastically deformed, thereby forming the arcuate conductor **9a.** The arcuate conductor **9a** has integrally an arc portion **91** formed in an arc shape by bending at plural positions and neutral connecting terminals **92** protruding radially inward from the arc portion **91.**

As shown in **FIGS.7** and **8****,** the first to third bus rings **6** to **8** are arranged in parallel to each other along an axial direction of the electricity collection and distribution ring **2A.** The neutral-phase bus ring **9** is arranged radially inward of the electricity collection and distribution ring **2A** with respect to the first to third bus rings **6** to **8.** The first connecting terminals **62,** the second connecting terminals **72,** the third connecting terminals **82** and the neutral connecting terminals **92** each have a J-shape as viewed from the axial direction of the electricity collection and distribution ring **2A** and protrude radially inward beyond the arc portions **91** of the neutral-phase bus ring **9.**

As shown in **FIGS.6A** and **6B****,** the holding member **3A** in the second embodiment has integrally a first base portion **31A** for holding the first to third bus rings **6** to **8,** a second base portion **32A** for holding the neutral-phase bus ring **9,** and an electrical supply line-supporting portion **33A** for holding connecting portions between the first to third bus rings **6** to **8** and the first to third electrical supply lines **63, 73** and **83.**

In the first base portion **31A,** plural first recessed portions **311A** are formed on an inner peripheral surface **31**Aa and plural second recessed portions **312A** are formed on an outer peripheral surface **31Ab.** The first recessed portions **311A** formed at plural positions radially inside the first to third bus rings **6** to **8** (on the inner peripheral surface **31Aa** of the first base portion **31A)** are holes each having an opening **311Aa** on an axial end face of the holding member 3A and extending in the axial direction of the holding member **3A.** In more detail, the first recessed portions **311A** is formed as a hole which has the opening **311Aa** on an axially upper surface **31Ac** of the first base portion **31A** (on the first bus ring **6** side) and extends toward an axially upper surface **32Ac** of the second base portion **32A.**

The second recessed portions **312A** formed at plural positions radially outside the first to third bus rings **6** to **8** (on the outer peripheral surface **31Ab** of the first base portion **31A)** are recesses each having an opening **312Aa** on an outer peripheral surface of the holding member **3A** (on the outer peripheral surface **31Ab** of the first base portion 31A) such that the first to third bus rings **6** to **8** are viewed on the radially outside through the openings **312Aa.**

### Method of manufacturing the electricity collection and distribution ring 2A

Next, a method of manufacturing the electricity collection and distribution ring **2A** will be described below. **FIG.9** shows an example of a manufacturing process of the electricity collection and distribution ring **2A** in the second embodiment and is a cross sectional view taken on line E-E of **FIG.6B**.

The method of manufacturing the electricity collection and distribution ring **2A** includes an arrangement step of arranging the first to third bus rings **6** to **8** and the neutral-phase bus ring **9** in a molding space **40A** formed among a first mold **41A,** a second mold **42A** and a third mold **43** A, and an injection step of injecting the molten resin **30** into the molding space **40A** in a state that the first to third bus rings **6** to **8** and the neutral-phase bus ring **9** are supported in the molding space **40A.**

The mold **4A** is composed of the first mold **41A,** the second mold **42A** and the third mold **43 A.** Plural protruding portions **410A** for forming the first recessed portions 311A of the holding member **3A** are provided on the first mold **41A.** The protruding portion **410A** has a bar shape extending toward the second mold **42A** and is provided with a contact surface **410Aa** in contact with at least a portion of outer peripheral surfaces of the first to third bus rings **6 to 8.** Alternatively, the protruding portions **410A** may be provided on the second mold **42A.**

A first groove **101** for supporting the first bus ring **6,** a second groove **102** for supporting the second bus ring 7 and a third groove **103** for supporting the third bus ring **8** are formed on the third mold **43A** so as to be along the circumferential direction of the first to third bus rings **6** to **8.** The first to third grooves **101** to **103** are formed in parallel to each other along an axial direction of the first to third bus rings **6** to **8.**

In the arrangement step, the first to third bus rings **6** to **8** and the neutral-phase bus ring **9** are arranged in the fixed second mold **42A** and the third mold **43A** is moved from outside to inside in the radial direction. This is carried out so as to respectively support the first bus ring **6** in the first groove **101,** the second bus ring 7 in the second groove **102** and the third bus ring **8** in the third groove **103.**

Next, the first mold **41A** is moved from axially above the first to third bus rings **6** to **8** and the neutral-phase bus ring **9** toward the second mold **42A** and the third mold **43A** and is then combined with the second mold **42A** and the third mold **43A.** Each protruding portion **410A** of the first mold **41A** is inserted between the first to third bus rings **6** to **8** and the neutral-phase bus ring **9** so that the contact surface **410Aa** of the protruding portion **410A** comes into contact with the outer peripheral surfaces of the first to third bus rings 6 to **8.** The first to third bus rings **6** to **8** are sandwiched and held between the first to third grooves **101** to **103** and the contact surface **410Aa** of the protruding portion **410A.** The molding space **40A** is thereby formed.

In the injection step, the molten resin **30** melted by heat is poured into the molding space **40A** formed in the arrangement step. The molten resin **30** is naturally-cooled and cured (solidified) and the holding member **3A** is thereby obtained. The first to third bus rings **6** to **8** are held inside the first base portion **31A** of the holding member **3A** and the neutral-phase bus ring **9** is held inside the second base portion **32A** of the holding member **3A.** By releasing from the first mold **41A,** the second mold **42A** and the third mold **43A,** the electricity collection and distribution ring **2A** shown in **FIGS.6A** and **6B** is obtained.

### Functions and effects of the second embodiment

The second embodiment achieves the following functions and effects in addition to the functions and effects (**1**) to (**3**) of the first embodiment.
(**4**) Since the electricity collection and distribution ring **2A** is configured that the first recessed portions **311A** are formed at plural positions radially inside the first to third bus rings **6** to **8** and the second recessed portions **312A** are formed at plural positions radially outside the first to third bus rings **6** to **8,** it is possible to support the first to third bus rings **6** to **8** from radially inside and outside. Therefore, it is possible to suppress movement (misalignment) of the first to third bus rings **6** to **8** during the injection step when molding the holding member **3A.**
(5) Since the protruding portions **410A** extending in the axial direction are formed on the first mold **41A** and are arranged radially inward of the first to third bus rings **6** to **8** at the time of clamping the mold **4A,** it is possible to suppress movement (misalignment) of the first to third bus rings **6** to **8** when molding the holding member **3A.** In other words, since the protruding portions **410A** are part of the first mold **41A** and are arranged at positions to sandwich the first to third bus rings **6** to **8** between themselves and the third mold **43A** at the same time as clamping, it is possible to suppress misalignment of the first to third bus rings **6** to **8** without making the manufacturing equipment complicated.
(**6**) Since mold clamping is carried out in the state that the first to third bus rings **6** to **8** are sandwiched and held between the first to third grooves **101** to **103** formed on the third mold **43A** and the contact surface **410Aa** of the protruding portion **410A** formed on the first mold **41A,** it is possible to suppress falling-off of the first to third bus rings **6** to **8** from the first to third grooves **101** to **103** at the time of pouring the molten resin **30** into the molding space **40A.**

### Summary of the embodiments

Technical ideas understood from the embodiments will be described below citing the reference numerals, etc., used for the embodiments. However, each reference numeral, etc., described below is not intended to limit the constituent elements in the claims to the members, etc., specifically described in the embodiments.
[**1**] An electricity collection and distribution ring (**2/2A**), comprising: a plurality of bus rings (first to third bus rings **21** to **23** and neutral-phase bus ring **20**/ first to third bus rings **6** to **8** and neutral-phase bus ring 9) for collecting and distributing power from/to multiple-phase windings (**111, 112, 113**) wound around a plurality of circularly-arranged teeth (**110**); and a resin holding member (**3/3A**) for holding the plurality of bus rings (first to third bus rings **21** to **23** and neutral-phase bus ring **20**/ first to third bus rings **6** to **8** and neutral-phase bus ring **9**), wherein the holding member (**3/3A**) has an annular shape along the plurality of bus rings (first to third bus rings **21** to **23** and neutral-phase bus ring **20**/ first to third bus rings **6** to **8** and neutral-phase bus ring **9**) and comprises exposure portions (**31**/ first recessed portions **311A** and second recessed portions **312A**) formed at a plurality of circumferential positions to expose the plurality of bus rings (first to third bus rings **21** to **23** and neutral-phase bus ring **20/** first to third bus rings **6** to **8** and neutral-phase bus ring 9) in a radial direction.
[**2**] The electricity collection and distribution ring (**2/2A**) described in the [1], wherein the plurality of bus rings (first to third bus rings **21** to **23** and neutral-phase bus ring **20**/ first to third bus rings **6** to **8** and neutral-phase bus ring **9**) are arranged in parallel to each other along an axial direction of the holding member (**3/3A**), and at least one of two axially adjacent bus rings is covered with an insulation (**212, 222, 232/612, 712, 812**).
[**3**] The electricity collection and distribution ring (**2A**) described in the [**2**]**,** wherein the exposure portions (first recessed portions **311A** and second recessed portions **312A**) are formed at a plurality of positions radially inside the plurality of bus rings (first to third bus rings **6** to **8**) and at a plurality of positions radially outside the plurality of bus rings (first to third bus rings **6** to **8**)**.**
[**4**] The electricity collection and distribution ring (**2A**) described in the [**3**]**,** wherein the exposure portions (first recessed portions **311A**) formed at the plurality of positions radially inside the plurality of bus rings (first to third bus rings **6** to **8**) are holes each comprising an opening (**311**Aa) on an axial end face (upper surface **31Ac**) of the holding member (**3A**) and extending in the axial direction of the holding member (**3A**)**,** and the exposure portions (second recessed portions **312A**) formed at the plurality of positions radially outside the plurality of bus rings (first to third bus rings **6** to &**8**) are recesses each comprising an opening (**312Aa**) on an outer peripheral surface (**31Ab**) of the holding member (**3A**) such that the plurality of bus rings (first to third bus rings **6** to **8**) are viewed on the radially outside through the openings (**312Aa**).
[**5**] A method of manufacturing an electricity collection and distribution ring (**2/2A**) provided with a plurality of bus rings (first to third bus rings **21** to **23** and neutral-phase bus ring **20**/ first to third bus rings **6** to **8** and neutral-phase bus ring **9**) for collecting and distributing power from/to multiple-phase windings (**111, 112, 113**) wound around a plurality of circularly-arranged teeth (**110**) and a resin holding member (**3/3A**) for holding the plurality of bus rings (first to third bus rings **21** to **23** and neutral-phase bus ring 20/ first to third bus rings **6** to **8** and neutral-phase bus ring **9**), the method comprising: using a mold (**4/4A**) comprising a pair of mold members that relatively move along an axial direction of the plurality of bus rings (first to third bus rings **21** to **23** and neutral-phase bus ring **20**/ first to third bus rings **6** to **8** and neutral-phase bus ring **9**) and form an annular molding space (**40/40A**) along a circumferential direction of the plurality of bus rings (first to third bus rings **21** to **23** and neutral-phase bus ring **20/** first to third bus rings **6** to **8** and neutral-phase bus ring 9) when being clamped; and molding the holding member (**3/3A**) by injecting a molten resin (**30**) into the molding space (**40/40A**) in a state that the plurality of bus rings (first to third bus rings **21** to **23** and neutral-phase bus ring **20**/ first to third bus rings **6** to **8** and neutral-phase bus ring **9**) are supported in the molding space (**40/40A**).
[**6**] The method described in the [**5**], wherein the mold (**4A**) comprises a first mold member (third mold **43A**) and a second mold member (first mold **41A**), a plurality of grooves (first to third grooves **101** to **103**) for respectively supporting the plurality of bus rings (first to third bus rings **6** to **8**) are formed on the first mold member (third mold **43A**), a contact surface (**410Aa**) facing the plurality of grooves (first to third grooves **101** to **103**) and in contact with at least a portion of outer peripheral surfaces of the plurality of bus rings (first to third bus rings **6** to **8**) is formed on the second mold member (first mold **41A**), and mold clamping is carried out in the state that the plurality of bus rings (first to third bus rings **6** to **8**) are sandwiched and held between the plurality of grooves (first to third grooves **101** to **103**) of the first mold member (third mold **43A**) and the contact surface (**410Aa**) of the second mold member (first mold **41A**).

Although the embodiments of the invention have been described, the invention according to claims is not to be limited to the embodiments. Further, please note that all combinations of the features described in the embodiments are not necessary to solve the problem of the invention.

In addition, the invention can be appropriately modified and implemented without departing from the gist thereof. For example, although the lead-out wire inserting portions **20a** of the neutral-phase bus ring **20** protrude radially outward of the arc portions **20d** in the first embodiment, it is not limited thereto as long as lead-out wire inserting portions of at least one of the neutral-phase bus ring **20** and the first to third bus rings **21** to **23** protrude radially outward of the arc portions.

In addition, although the first to third bus rings **21** to **23** and 6 to **8** are respectively covered with the insulations **212, 222, 232, 612, 712** and **812** in the embodiments, it is not limited thereto as long as at least one of two axially adjacent bus rings is covered with an insulation.

In addition, the shape and movement of the molds **4** and **4A used** in the embodiments are not specifically limited as long as the purpose of the mold formation of the holding member **3** and **3A** is achieved.

In addition, in the first embodiment, the molten resin **30** may be poured into the molding space **40** in a state that the bus ring-facing surface **43a** of the third mold **43** is in contact with the outer peripheral surfaces of the first to third bus rings **21** to **23** and the neutral-phase bus ring **20.** In this case, the first to third bus rings **21** to **23** and the neutral-phase bus ring **20** are sandwiched and held between the first to third grooves **421** to **423,** the neutral-phase groove **420** and the bus ring-facing surface **43a** and it is thus possible to suppress falling-off of the first to third bus rings **21** to **23** and the neutral-phase bus ring 20 from the first to third grooves **421** to **423** and the neutral-phase groove **420** at the time of pouring the molten resin 30 into the molding space **40.**

In addition, in the first embodiment, the second mold **42** may be provided with a contact portion which is in contact with the outer peripheral surfaces of the first to third bus rings **21** to **23** and the neutral-phase bus ring **20.** In this case, the first to third bus rings **21** to **23** and the neutral-phase bus ring **20** are sandwiched and held between the first to third grooves **421** to **423,** the neutral-phase groove **420** and the contact portion of the second mold **42** and it is thus possible to suppress falling-off of the first to third bus rings **21** to **23** and the neutral-phase bus ring **20** from the first to third grooves **421** to **423** and the neutral-phase groove **420** at the time of pouring the molten resin **30** into the molding space **40.**

## Claims

1. An electricity collection and distribution ring, comprising:
a plurality of bus rings for collecting and distributing power from/to multiple-phase windings wound around a plurality of circularly-arranged teeth; and
a holding member comprising a resin and holding the plurality of bus rings,
wherein the holding member comprises an annular shape along the plurality of bus rings and a exposure portion formed at a plurality of circumferential positions in a radial direction so as to expose the plurality of bus rings.

2. The electricity collection and distribution ring according to claim **1,** wherein the plurality of bus rings are arranged in parallel to each other along an axial direction of the holding member, and
wherein at least one of two axially adjacent bus rings is covered with an insulation.

3. The electricity collection and distribution ring according to claim 1 or 2, wherein the exposure portion is formed at a plurality of positions radially inside the plurality of bus rings and at a plurality of positions radially outside the plurality of bus rings.

4. The electricity collection and distribution ring according to claim 3, wherein the exposure portion formed at the plurality of positions radially inside the plurality of bus rings comprises a hole comprising an opening on an axial end face of the holding member and extending in the axial direction of the holding member, and
wherein the exposure portion formed at the plurality of positions radially outside the plurality of bus rings comprises a recess comprising an opening on an outer peripheral surface of the holding member such that the plurality of bus rings are viewed on the radially outside through the opening.

5. A method of manufacturing an electricity collection and distribution ring, which comprises a plurality of bus rings for collecting and distributing power from/to multiple-phase windings wound around a plurality of circularly-arranged teeth and a holding member comprising and holding the plurality of bus rings, the method comprising:
providing a mold comprising a pair of mold members that relatively move along an axial direction of the plurality of bus rings and form an annular molding space along a circumferential direction of the plurality of bus rings when being clamped; and
molding the holding member by injecting a molten resin into the molding space in a state that the plurality of bus rings are supported in the molding space.

6. The method according to claim 5, wherein the mold comprises first and second mold members,
wherein the first mold member comprises a plurality of grooves for respectively supporting the plurality of bus rings,
wherein the second mold member comprises a contact surface facing the plurality of grooves and in contact with at least a portion of outer peripheral surfaces of the plurality of bus rings, and
wherein the mold is clamped while the plurality of bus rings are sandwiched and held between the plurality of grooves of the first mold member and the contact surface of the second mold member.
